# EUROPEAN PATENT APPLICATION

(11) **EP 3 604 017 A1**
(43) Date of publication of application: **05.02.2020**
(21) Application number: 18186796.1
(22) Date of filing: 01.08.2018
(51) Int. Cl.: B60L 3/00, H02H 3/16, B60L 3/04

(54) **ELECTRICAL POWER SUPPLY APPARATUS AND METHOD FOR OPERATING AN ELECTRICAL POWER SUPPLY APPARATUS**

(71) Applicant: Vestel Elektronik Sanayi ve Ticaret A.S., 45030 Manisa (TR)
(72) Inventor: TARHAN, Cengiz, 45030 Manisa (TR); ÖZVURAL, Görkem, 45030 Manisa (TR); USLU, Mutlu, 45030 Manisa (TR)
(74) Representative: Thomas, Michael Andrew

(57) **Abstract**

There is provided an electrical power supply apparatus (70) having an input for receiving mains electrical power (10), supplied to the input via a protective element (30), and a connector (75), configured for coupling to a device for the supply of electrical power to the device. The device may be an electric vehicle for example. The power supply apparatus (70) includes a controller (85), configured to control a contactor (80) to connect or to disconnect the supply of electrical power from the input to the connector (75). The apparatus (70) also includes a component (90), controllable by the controller (85), to cause an electrical condition to be generated at the input. The electrical condition is of a type that is detectable by the protective element (30) and, when detected, causes the protective element (30) to interrupt the supply of mains electrical power (10) to the input.

## Description

### Technical Field

The present disclosure relates to an electrical power supply apparatus and to a method for operating an electrical power supply apparatus.

### Background

Electrical power supplies may be provided for intermittent connection, as opposed to permanent connection to a device, for example to charge a battery. Examples include electric vehicle charging points, whether lower power domestic charging points or higher power electric vehicle charging stations. Additional safety measures are required to ensure, for example, that a connector for coupling to the device does not present an electric shock hazard when not coupled to the device, as may arise in the event of a fault within an associated power supply apparatus.

Higher power electric vehicle charging apparatus may rely, as a fall-back safety feature, on mechanical triggering of a residual current circuit breaker (RCCB) provided 'in-line' with a mains electrical power input to the apparatus if a fault likely to compromise safety is detected in the charging apparatus.

### Summary

According to a first aspect disclosed herein, there is provided electrical power supply apparatus, comprising:
an input for receiving mains electrical power, supplied in use to the input via a protective element;
a connector, configured for coupling to a device for the supply of electrical power to the device;
a controller;
a contactor, controllable by the controller to connect or to disconnect the supply of electrical power from the input to the connector; and
a component, controllable by the controller to cause an electrical condition to be generated at the input, the electrical condition being detectable by the protective element to cause an interruption of the supply of mains electrical power to the input.

An electrical power supply apparatus according to the present disclosure is able to trigger operation of an external protective element from within the apparatus itself, in particular where a fault condition detected within the apparatus would not usually cause a triggering of the protective element. Prior art arrangements require that additional equipment be provided to trigger the protective element mechanically using an actuator or other method for mechanical triggering, if such a fault is detected.

In an example, the controller is configured to detect a fault condition relating to the supply of electrical power to a device and, responsive thereto, to control the component to cause the electrical condition to be generated at the input.

In an example, the controller is configured to detect a fault condition that comprises a contactor fault. In an example, the contactor fault comprises a failure of the contactor to disconnect the supply of electrical power from the input to the connector. Such a fault would not generally cause the protective element to be activated, but nevertheless causes a safety hazard to a user of the apparatus.

In an example, the contactor fault comprises a welding of switching contacts within the contactor.

In an example, the controller is configured:
to determine whether or not the connector is coupled to a device for the supply of electrical power to the device; and
responsive to determining that the connector is not coupled to the device and to detecting the contactor fault comprising a failure of the contactor to disconnect the supply of electrical power from the input to the connector, controlling the component to cause the electrical condition to be generated at the input.

In an example, the component is controllable to cause an electrical condition to be generated at the input comprising a difference between an electric current received at the input and an electric current returned to the input by the power supply apparatus.

In an example, the input from the protective element comprises a protective earth conductor and the component is controllable to cause a residual electric current to be supplied to the protective earth conductor.

In an example, the component is controllable to cause a transient residual electric current to be supplied from a passive or active component of the power supply apparatus to the protective earth conductor.

According to a second aspect disclosed herein, there is provided an electric vehicle charging station comprising a power supply apparatus as disclosed herein according to the first aspect described above for supplying electrical power to charge a battery of an electric vehicle.

According to a third aspect disclosed herein, there is provided a method of operating a power supply apparatus, the power supply apparatus comprising a contactor controllable to switch a supply of mains electrical power received via a protective element, at an input to the apparatus, to a connector configured for coupling to a device for supply of electrical power to the device, the method comprising:
detecting a fault in the power supply apparatus; and
responsive to detecting the fault, causing an electrical condition to be generated at the input to the apparatus, the electrical condition being detectable by the protective element to cause an interruption of the supply of mains electrical power to the input.

In an example, the method comprises:
determining whether or not the connector is coupled to the device for supply of electrical power to the device; and
responsive to determining that the connector is not coupled to the device and to detecting a fault in the contactor, causing the electrical condition to be generated at the input to the apparatus.

In an example of the method, the detecting of a fault in the contactor comprises detecting a welding of switching contacts within the contactor.

In an example of the method, the causing of the electrical condition to be generated at the input comprises causing an electric current that is returned to the input by the power supply apparatus to be different to an electric current received at the input.

In an example of the method, the input includes a protective earth conductor and said causing the electrical condition to be generated at the input comprises causing a residual electric current to be supplied from a passive or active component of the power supply apparatus to the protective earth conductor.

### Brief Description of the Drawings

To assist understanding of the present disclosure and to show how embodiments may be put into effect, reference is made by way of example to the accompanying drawings in which:
Figure 1 shows schematically an example of a known power supply arrangement as may be used for example in an electric vehicle charging station; and
Figure 2 shows schematically an example of a power supply arrangement according to the present disclosure.

### Detailed Description

The present disclosure relates to electrical supply apparatus for the supply of electrical power to a device. In examples, the present disclosure relates to the controlled supply of high levels of electric current from a mains power input to a device via an appropriately configured connector which may be coupled to and decoupled from the device. A power supply apparatus according to the present disclosure may be used for example in an electric vehicle charging station (EVCS), providing additional levels of safety to ensure that there is no electric shock hazard to users in the case that no electric vehicle is coupled to the power supply apparatus. Alternatively, a power supply apparatus of the present disclosure may be used in any application in which additional levels of safety are required to prevent an electric shock hazard to users in the event of a fault occurring in the power supply apparatus.

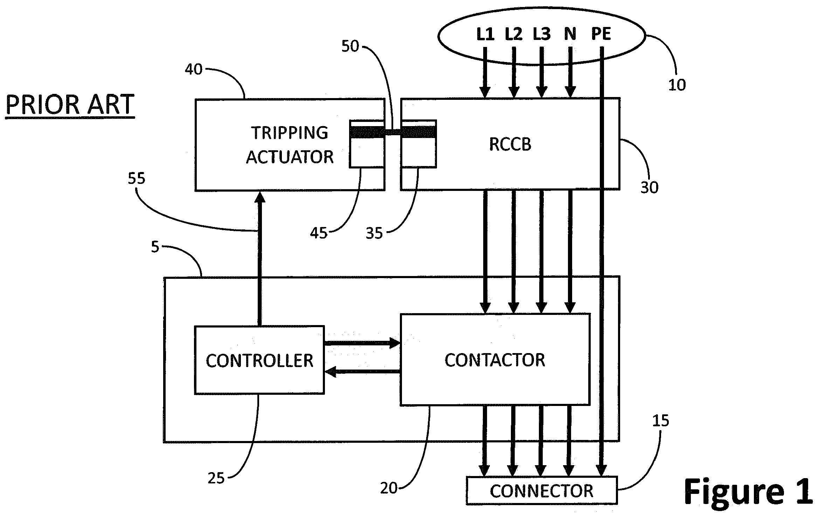

In those applications in which a supply of electrical power to a device, such as an electric vehicle, is provided via a connector which may be coupled to and decoupled from the device, particular safety features are required to prevent the supply of electrical power to the connector while not coupled to the device. For example, where the power supply apparatus is intended to supply high levels of electric current, as required for rapid charging of electric vehicles, the power supply apparatus is required to prevent electrical contacts of the connector being 'live' when not coupled to a device. This not only prevents arcing or other undesirable effects while coupling the connector to a device or while decoupling the connector from the device, but also avoids an electric shock hazard to a user when handling the connector. A known example of a high-power supply apparatus incorporating one such safety feature will now be described with reference to Figure 1.

Referring to Figure 1, a block diagram shows, schematically, components in an example of an electrical power supply arrangement as may be used in an EVCS. In this known example, a power supply apparatus 5 is provided to supply a high level of electric current to a device (not shown in Figure 1) from a three-phase alternating current (AC) mains supply 10, received as an input to the power supply apparatus 5. In this example, electric current received from the three-phase mains supply 10 is provided at a connector 15 of the apparatus 5, configured for example for electrical coupling to an electric vehicle. The power supply apparatus 5 links the mains three-phase supply 10 to the connector 15 via a contactor 20, or high-power relay, under the control of a power supply controller 25. The controller 25 is configured to determine when the connector 15 is coupled to an electric vehicle to be charged or other device, and when it is not coupled to the electric vehicle or other device. The controller 25 is configured to ensure, at least, that the contactor 20 interrupts the supply of electrical power to the connector 15 when not coupled to an electric vehicle or other device.

One known problem with such high-power supply apparatus 5 occurs when switching contacts within the contactor 20 become welded, due for example to arcing that occurs between switching contacts as they come together and separate during switching. For example, the switching contacts may gradually degrade over time, reducing their tolerance of arcing. When switching contacts become welded, the contacts do not separate when the controller 25 signals to the contactor 20 to disconnect the mains power supply 10 from the connector 15. In such a situation, the electrical contacts of the connector 15 remain 'live' when the connector 15 is decoupled from the device, presenting a risk of electric shock to a user. The contactor 20 is however able to detect when its switching contacts become welded and is arranged to output a signal to the controller 25 indicating a fault within the contactor 20.

To meet usual electrical installation safety requirements, the power supply apparatus 5 is linked in this example to the mains three-phase electrical supply 10 via a three-phase residual current circuit breaker (RCCB) 30. The RCCB 30 is arranged to 'trip' and thereby to interrupt the mains supply 10 in the event that it detects a difference between the net current supplied by the three phase conductors 'L1', 'L2' or 'L3' to the power supply apparatus 5, and the current returned over a neutral conductor 'N'. A testing button or other form of switch 35 is provided on the RCCB 30 to enable manual 'tripping' of the RCCB 30 to interrupt the mains supply 10 for testing purposes.

However, a fault such as that described above, in which the switching contacts of the contactor 20 become welded, would not, itself, cause a detectable difference between the net phase current and the current returned over the neutral conductor N. The RCCB 30 would not therefore trip and interrupt the mains supply 10. Such a situation represents a safety hazard for users of the power supply apparatus 5 and is clearly undesirable.

It is known, therefore, to provide an additional piece of equipment associated with the RCCB 30, namely a 'tripping' actuator 40. The tripping actuator 40 may for example comprise a movable part 45 that may be linked mechanically to the test button 35 of the RCCB 30 by a linking bar 50 or by another type of mechanical connection. When the tripping actuator 40 moves the movable part 45, the movement is transferred by the linking bar 50 to the RCCB test button or switch 35 and so trips the RCCB 30 mechanically.

The controller 25 of the power supply apparatus 5 is arranged to send a control signal to the tripping actuator 40 over a signalling connection 55 in the event that the contactor 20 signals to the controller 25 that there is a fault. The controller 25 is thereby arranged to activate the tripping actuator 40 and so trip the RCCB 30, interrupting the supply of electrical power from the mains supply 10 to the power supply apparatus 5 and so to the connector 15.

The arrangement shown in Figure 1 has several disadvantages. Firstly, the addition of the tripping actuator 40 introduces another potential point of failure into the power supply arrangement. Secondly, the power supply apparatus 5 must be linked by a separate signalling connection 55 to the tripping actuator 40, which is necessarily located in this example with the RCCB 30 and which may be located some distance from the location of the power supply apparatus 5.

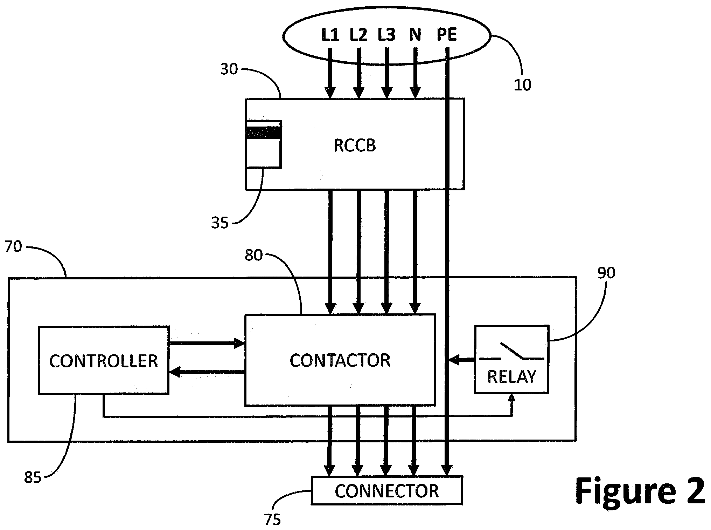

In a first example according to the present disclosure, a power supply apparatus is configured to trigger a RCCB by a different arrangement, not involving a separate triggering device to trigger the RCCB. An example of such a power supply apparatus will now be described with reference to Figure 2. As in the example described above with reference to Figure 1, the power supply apparatus in this example is a three-phase power supply apparatus intended for use in supplying a high level of electrical power through an electrical connector, as for example in an EVCS. However, the principles of operation to be described may equally be applied to any power supply arrangement, including for example a single phase AC power supply, a direct current (DC) power supply and to combinations thereof.

Referring to Figure 2, a block diagram shows schematically components of an example power supply arrangement according to the present disclosure. In this example, a power supply apparatus 70 is provided to supply a high level of electric current to a device (not show in Figure 2) from a three-phase alternating current (AC) mains supply 10, received via an RCCB 30 as an input to the power supply apparatus 70. The input comprises three live phase conductors 'L1', 'L2', and 'L3', a neutral conductor 'N' and a protective earth conductor 'PE'. In this example, electric current received from the three-phase mains supply 10 is provided at a connector 75, configured for example for electrical coupling to an electric vehicle. The power supply apparatus 70 links the mains three-phase supply 10 to the connector 75 via a contactor 80, or high-power relay, under the control of a power supply controller 85. The controller 85 is configured to determine when the connector 75 is coupled to an electric vehicle to be charged or other device, and when it is not coupled to the electric vehicle or other device. The controller 85 is configured to ensure, at least, that the contactor 80 interrupts the supply of electrical power to the connector 75 when not coupled to an electric vehicle or other device.

The power supply apparatus 70 also comprises, according to one example of the present disclosure, a relay 90 or other type of controllable switch which is electrically connected to a residual current source within the power supply apparatus 70 and to the protective earth conductor 'PE' included at the input. The relay 90 is also electrically connected to the controller 85 so that the controller 85 may activate the relay 90 to connect the residual current source to the protective earth conductor PE at the input. The residual current source may for example be any passive or active component within the power supply apparatus 70 that operates using an electric current derived from one of the three phases 'L1', 'L2' or 'L3' of the three-phase mains supply input. In this way, when the relay 90 is activated by the controller 85, a difference is generated at the input between the current received by the live phase conductors LI, L2 and L3 and the electric current returned to the input over a neutral conductor N. Such a difference in electric current is detectable by the protective RCCB 30 and causes the RCCB 30 to 'trip' and so interrupt the mains supply to the input of the power supply apparatus 70. The controller 85 may activate the relay 90 for any period of time required to trip the RCCB 30.

The controller 85 is configured to activate the relay 90 when it receives a signal from the contactor 80 indicating a fault in the contactor 80. The fault may for example comprise a welding of two or more switching contacts within the contactor 80, so causing electrical contacts of the connector 75 to remain live until interrupted by the tripping of the RCCB 30 when the relay 90 is activated. The controller 85 may be configured to respond to other types of fault conditions detected within the power supply apparatus 70 to activate the relay 90. The controller 85 may also be configured to activate the relay 90 in the event that a user requires an emergency interruption of electrical power, for example by pressing an emergency 'Off' button.

Advantageously, by generating conditions at the input to the power supply apparatus 70 that the RCCB 30 is designed to detect and so be caused to trip, additional equipment such as the tripping actuator 40 of the prior art shown in Figure 1 is avoided.

The function of the relay 90 may alternatively be provided by a semi-conductor switching arrangement or by any other known arrangement for causing a difference between an electric current that is supplied to an input of the power supply apparatus and that returned to the input. The difference in electric current may be caused for example by switching or inducing a residual current flow to the protective earth conductor 'PE' or by another technique as would be apparent to a person of ordinary skill in the relevant art.

In alternative implementations according to the present disclosure in which electrical power is supplied to the power supply apparatus 70 via other types of protective element, a controllable component may be selected to cause an electrical condition to be generated at the input as required to cause the protective element to interrupt the supply of electrical power to the apparatus 70.

The present disclosure also extends to a method for operating a power supply apparatus, providing additional levels of safety in the event of a detectable fault occurring within the power supply apparatus. According to this method, an electrical condition is caused to be generated at an input to the apparatus from an electrical power source such that the condition is detectable by a protective element provided in a path to the electrical power source and causes an interruption to the supply of electrical power from the source.

It will be understood that the controller 85 may comprise a processor or processing system or circuitry provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An electrical power supply apparatus (70), comprising:
an input for receiving mains electrical power (10), supplied in use to the input via a protective element (30);
a connector (75), configured for coupling to a device for the supply of electrical power to the device;
a controller (85);
a contactor (80), controllable by the controller (85) to connect or to disconnect the supply of electrical power from the input to the connector (75); and
a component (90), controllable by the controller (85) to cause an electrical condition to be generated at the input, the electrical condition being detectable by the protective element (30) to cause an interruption of the supply of mains electrical power (10) to the input.

2. The electrical power supply apparatus (70) according to claim 1, wherein the controller (85) is configured to detect a fault condition relating to the supply of electrical power to a device and, responsive thereto, to control the component (90) to cause the electrical condition to be generated at the input.

3. The electrical power supply apparatus (70) according to claim 2, wherein the controller (85) is configured to detect a fault condition that comprises a contactor fault.

4. The electrical power supply apparatus (70) according to claim 3, wherein the controller (85) is configured to detect a contactor fault that comprises a failure of the contactor (80) to disconnect the supply of electrical power from the input to the connector (75).

5. The electrical power supply apparatus (70) according to claim 3 or claim 4, wherein the contactor fault comprises a welding of switching contacts within the contactor (80).

6. The electrical power supply apparatus (70) according to claim 4 or claim 5, wherein the controller (85) is configured:
to determine whether or not the connector (75) is coupled to a device for the supply of electrical power to the device; and
responsive to determining that the connector (75) is not coupled to the device and to detecting the contactor fault comprising a failure of the contactor (80) to disconnect the supply of electrical power from the input to the connector (75), controlling the component (90) to cause the electrical condition to be generated at the input.

7. The electrical power supply apparatus (70) according to any of claims 1 to 6, wherein the component (90) is controllable to cause an electrical condition to be generated at the input comprising a difference between an electric current received at the input and an electric current returned to the input by the power supply apparatus (70).

8. The electrical power supply apparatus (70) according to any of claims 1 to 7, wherein the input from the protective element (30) comprises a protective earth conductor (PE) and the component (90) is controllable to cause a residual electric current to be supplied to the protective earth conductor (PE).

9. The electrical power supply apparatus (70) according to claim 8, wherein the component (90) is controllable to cause a transient residual electric current to be supplied from a passive or active component of the power supply apparatus (70) to the protective earth conductor (PE).

10. An electric vehicle charging station comprising a power supply apparatus (70) according to any of claims 1 to 9 for supplying electrical power to charge a battery of an electric vehicle.

11. A method of operating a power supply apparatus (70), the power supply apparatus (70) comprising a contactor (80) controllable to switch a supply of mains electrical power (10) received via a protective element (30), at an input to the apparatus (70), to a connector (75) configured for coupling to a device for supply of electrical power to the device, the method comprising:
detecting a fault in the power supply apparatus (70); and
responsive to detecting the fault, causing an electrical condition to be generated at the input to the apparatus (70), the electrical condition being detectable by the protective element (30) to cause an interruption of the supply of mains electrical power (10) to the input.

12. The method according to claim 11, comprising:
determining whether or not the connector (75) is coupled to the device for supply of electrical power to the device; and
responsive to determining that the connector (75) is not coupled to the device and to detecting a fault in the contactor (80), causing the electrical condition to be generated at the input to the apparatus (70).

13. The method according to claim 12, wherein said detecting a fault in the contactor (80) comprises detecting a welding of switching contacts within the contactor (80).

14. The method according to any of claims 11 to 13, wherein said causing the electrical condition to be generated at the input comprises causing an electric current that is returned to the input by the power supply apparatus (70) to be different to an electric current received at the input.

15. The method according to any of claims 11 to 14, wherein the input includes a protective earth conductor (PE) and said causing the electrical condition to be generated at the input comprises causing a residual electric current to be supplied from a passive or active component of the power supply apparatus (70) to the protective earth conductor (PE).
